# EUROPEAN PATENT SPECIFICATION

(11) **EP 3 293 995 B1**
(45) Date of publication and mention of the grant of the patent: **07.09.2022**
(21) Application number: 16187973.9
(22) Date of filing: 09.09.2016
(51) Int. Cl.: H04W 12/04, H04W 12/084, G07C 9/00

(54) **LOCKING SYSTEM AND SECURE TOKEN AND OWNERSHIP TRANSFER**
SPERRSYSTEM UND SICHERE ÜBERTRAGUNG VON TOKEN UND EIGENTUM
SYSTÈME DE VERROUILLAGE ET TRANSFERT SECURISÉ DE JETON ET DE POSSÉSSION

(43) Date of publication of application: 14.03.2018
(73) Proprietor: Swissprime Technologies AG, 8804 AU (CH)
(72) Inventor: Riesen, Thomas, 8820 Wädenswil (CH)
(74) Representative: Toleti, Martin

(56) References cited:
- US-A1- 2013 099 892
- US-A1- 2014 040 621
- US-A1- 2016 055 695
- US-B1- 8 120 460
- US-B1- 8 410 898

## Description

### Technical Field

The present invention relates to a locking system, individual components thereof, and to a method for a mobile electronic device enabling another electronic device to operate a lock already operable by the mobile electronic device.

### Background Art

Mechanical locks operated by a mechanical key are widely known. The same is true for locks operated by cards containing a code, such as is used in hotels, for example.

US 2014/040621 A1 refers to a mobile device including a controller with a memory storing a key and a communication interface. The key is configured to be used to generate an authentication sequence. The controller is configured to transmit the key via the communication interface upon request. The communication interface can be an NFC interface.

US 8,120,460 B1 refers to a method for method of initializing an electronic lock. The method comprises a point-of-sale terminal reading electronic lock identification information from the electronic lock and the point-of-sale terminal receiving confidential information from a mobile electronic device. The method also comprises an inventory control system that is coupled to the point-of-sale terminal and that transmits an electronic lock registration message, wherein the registration message contains at least some of the confidential information and at least some of the identification information. When the inventory control system receives an electronic access code in response to the electronic lock registration message, the point-of-sale terminal transmits the electronic access code to the mobile electronic device. The electronic access code is operable to lock and unlock the electronic lock when transmitted, using near-field-communication technology, to the electronic lock.

US 2016/055695 A1 refers to an apparatus and a method that enables an owner/administrator to manage access to a shared resource based on identity that is established by use of biometric data. For example, access to a shared physical resource can be restricted via use of a biometric locking device. An access management platform can be used to authorize a new user to access the shared resource. Once authorized, the new user can unlock the biometric locking device based on, for example, fingerprint data of his finger. The access management platform can similarly be used to manage access to a virtual shared resource, such as an online account. A virtual locking device, such as a computer that acts as an intermediary between the user and the online account, can be used to restrict access to the online account. The access management platform can enable the user to access the online account based on biometric data.

US 8,410,898 B1 refers to a computer-implemented technique which includes storing keychains in a memory of a computer. A login identifier and a password are received from a mobile device. The login identifier and the password are verified. Subsequent to the verification, one of the keychains is downloaded from the computer to the mobile device. The keychain includes N keys that are each associated with one of M physical locks of M locking devices, where N and M are integers greater than or equal to 1. The M locking devices or another locking device are monitored. Information in a key log is recorded when each of the N keys is used on one of the M locking devices or another locking device. The information includes a locking device identifier and a key identifier. The mobile device is alerted when each of the N keys is used based on the key log.

US 2013/099892 A1 refers to a primary portable device that can access a vehicle by transmitting an activation message including a vehicle access credential to the vehicle. The primary portable device can additionally enable a secondary portable device to access the vehicle by transmitting the vehicle access credential to the secondary portable device. The connections between the primary portable device, secondary portable device, and vehicle can be based on a short-range wireless protocol, such as Bluetooth or Bluetooth LE.

### Disclosure of the Invention

According to a first aspect of the present invention, a mobile electronic device according to claim 1 is provided, comprising an interface to a short-range wireless network, another interface to another network, a digital key stored in the mobile electronic device for locking or unlocking an assigned lock, and a processing unit.

The mobile electronic device preferably is a smart phone, but may also be a wearable computer, a tablet computer, a smart watch, smart glasses, a smart wristband, or any other portable electronic device, that may serve for general purpose computing or for specific purpose computing and / or communication. The mobile electronic device, in short "device", comprises at least two interfaces to networks. While a first interface - also referred to as interface - is an interface to a short range wireless network, the second interface - also referred to as other interface - is an interface to another network, preferably also a wireless network, which allows the device to interact with another mobile electronic device, preferably via a server in the Internet. Preferably, the first interface is an interface for short-range wireless radio communication. In particular, this interface is an interface for applying one of the following wireless radio communication protocols: Bluetooth; Bluetooth Low Energy; Near Field Communication. The wireless network may connect at least two devices, such as the device and a lock in the present case. Preferably, short-range is defined as to allow data transmission up to a maximum of 50 m, and even more preferably up to a maximum of 10 m. The short-range wireless network may in one embodiment also be referred to as Wireless Personal Area Network, abbreviated as WPAN or WiFiPAN.

The other interface, instead, preferably is an interface to the cloud, i.e. a network of servers in the Internet, including in particular a dedicated server that is configured to support lock administration in the present context. In particular, the other interface is an interface to a wireless local area network, or to a wireless mobile communications network, such as to a 3G or 4G network whereas a further transfer of data packets may be wire-bound e.g. via the Internet.

The mobile electronic device is construed as electronic key for locking and unlocking an assigned lock. For this purpose, a digital key is stored on the device, which replaces a conventional physical key. In contrast to the physical key, the digital key is a code, e.g. represented by a sequence of binary or n-ary numbers that allows a user of the device to lock or unlock the lock. The lock, in turn, preferably is programmed to be locked or unlocked only by using the assigned digital key, but no other digital key. For this purpose, it is desired that the lock includes electronics for verifying, if a digital key used to lock or unlock is the digital key valid for the lock. For this purpose, the very digital key not only is stored in the device but also in the lock.

In one embodiment, the lock includes a bolt, however, is enhanced by means of electronics: Given that the bolt is desired to be electronically controlled, the lock preferably comprises an electrical / mechanical actuator configured to convert an electrical signal, e.g. a lock signal or an unlock signal, into a movement of the bolt. In one embodiment, the actuator is an electrical motor. The device and the lock preferably communicate via the short range wireless network. Accordingly, the lock preferably comprises an interface to such short-range wireless network.

A processing unit of the device may, in response to what is called a lock operation event, generate a token based on the digital key, and send the token via its interface and the short range wireless network to the lock. The lock receives the token via its interface to the very wireless network. The lock preferably comprises a processing unit for processing the received token, and in particular verifying if the digital key used to generate the token matches the digital key stored in the lock.

As to the locking and / or unlocking, it is understood that the device only can successfully trigger a lock or unlock operation as long as the corresponding lock resides within the range of the wireless network, and, if the device has the digital key valid for the lock.

The lock may be lock used to lock a door, a safe, furniture, a vehicle, etc. The lock preferably is a lock including the bolt for mechanically restricting physical access to some space, apparatus, device, etc. However, in another embodiment, the lock may be a lock granting access to one of a service, data, power, which access may be protected by the lock.

The processing unit of the device is configured to initiate a lock or unlock operation at the lock by configuring a token by making use of the digital key. Preferably, the token is generated using a cryptographic operation. In an embodiment, the digital key may be used in a cryptographic operation to generate the token, and preferably as symmetric key for encrypting some content which content may only be decrypted if the lock is in possession of the digital key, too, as is the device. Preferably, the content to be encrypted at the device is a combination of random values. Preferably, the lock generates a lock random value that is sent to the device. The device generates a device random value and, in response to receiving the lock random value, combines the lock random value and the device random value, e.g. by joining the two random values, and finally applies a cryptographic operation on this combined random values, e.g. encrypts the combined random values by making use of the digital key. In one embodiment, the encrypted combination of random values represents the token, which then is sent to the lock. In response to receiving the token, the lock preferably verifies the token by using the digital key stored in the lock. In particular, the processing unit of the lock applies a cryptographic operation, and in particular decrypts the token, and especially decrypts the token by means of the locally stored digital key. As a result, the combined random values are available at the lock. In case the lock can therein identify the lock random value submitted to the device in the earlier communication, the token is positive verified as valid token for executing the desired lock or unlock operation. For this purpose, the lock preferably has stored the previously generated lock random value. Hence, the generation of the token based on the digital key is to be understood in a broad sense in that the digital key in some way contributes to the building of the token.

In the context of the present invention, it is desired that a user of the device may grant access to the lock to others, e.g. another user and / or another device. For this reason, the processing unit of the device may initiate the granting of access rights to another mobile electronic device, in the following referred to as other device. Another token is generated by the processing unit, which other token preferably is generated following a different approach than the generation of the token supplied to the lock: Still, the other token is based on the digital key, and an encryption operation is involved in generating the other token. This other token is transmitted to the other device, via the server. In the other device, preferably in a processing unit thereof, the digital key is extracted from the other token such that the digital key can be stored in the other device and in the following can be used to lock or unlock the very same lock.

The other token is transmitted to the other device via another interface different to the interface to the short range wireless network. A preparation to assembling and sending the other token is performed by the device in combination with a server in the Internet / cloud which hosts information relevant to administering the contactless lock application. Hence, the other interface is an interface to such server and preferably, any interaction with the other device is routed via the server.

In the device, the digital key is stored in combination with an ownership tag. A tag in general may be considered as an indicator, which rights are assigned in using the digital key. The ownership tag may also be referred to as administrator tag and preferably provides the most rights applicable. For example, another device being granted access to a lock it has no ownership of, may have a guest tag assigned to the digital key indicating that it has only predefined guest access which corresponding rights may be defined upfront and are limited with respect to the rights granted by an ownership tag.

The assignment of the ownership tag to the digital key of a lock preferably is performed during the initialization of the lock which is described later on. As long as an ownership tag is assigned to a digital key on a device - which implies that both the digital key and the ownership tag both are stored on the device -, a user of the device can operate the lock assigned to the digital key, i.e. to lock or unlock the lock -, and can submit the digital key to another device for granting access rights to the lock to the user of the other device. Only a release request may release the ownership tag from the digital key, and hence disable the device to operate the lock and to grant access rights to other devices. Therefore, the presence of the digital key on the device in combination with the ownership tag at the time a lock operation or an access right grant operation is triggered is critical. Such trigger does not trigger the digital key to be requested from elsewhere: In case, at the time of the trigger, no digital key for the lock is stored in the device in combination with a tag defining the rights for using the digital key, the device cannot operate the lock or grant access rights to the other device respectively.

The device preferably includes input and output means, e.g. as in form of a touchscreen, or in form of a pointing device and a display. Any interaction between the user and an application, which is considered a computer program executing preferred embodiments of the methods when loaded and executed by the processing unit, may preferably be made by the help of a graphical user interface (GUI) representing the combined input and output means. Such GUI may, for example, show an icon for each lock a digital key is stored on the device. In one embodiment, the icon itself may represent the status of the lock, i.e. either locked or unlocked. The status preferably is transmitted from the lock to the device in form of a lock status confirmation in response to receiving the token, and in particular in response to a successful locking or unlocking operation initiated by the token. In response to receiving the lock status confirmation, the GUI of the device switches from the locked to the unlocked representation of the icon, or vice versa. In the same way, the application may show to the user of the device, via the GUI, a set of digital keys (two or more), each being assigned and suitable to lock or unlock a specific, different lock. In this case, the device may act as a virtual keychain. The status of all these locks may be illustrated on the same GUI, as well as any access rights granted.

In case the, or one of the locks is to be operated, the icon representing the lock preferably is selected, e.g. touched on a touchscreen. Such user initiated trigger on the GUI may act as lock operation trigger finally initiating the assembly and sending of the token.

For triggering a transfer of the digital key to the other device, the GUI may offer a button or similar input means for the user to offering access rights to the lock administered by the user of the device, i.e. having ownership status. In case of access rights granted, the other device may, in response to a completion of the access rights transfer, return an access status confirmation to the device confirming a successful transfer of the digital key, which in turn shows up on the GUI, e.g. in combination with the corresponding lock.

As to the process of transferring the digital key to the other device, any related communication is not transmitted directly between the device and the other device, but via a server in between. Preferably, the server acts as a central hosting unit for the subject service.

In this context, it is preferred that in response to a successful lock operation, a lock status confirmation is sent from the lock to the device and from the device to the server. Hence, the user may monitor the status of all locks assigned not only on the device but also when logging into the server.

It is preferred that any user desiring to operate a lock in a contactless way by means of a smartphone, for example, has to register at the service. Such registration may include, for example, personal data such as name of the user, email address, etc., and preferably also includes a user specific cryptographic means. Preferably, the cryptographic means comprises means for asymmetric encryption, and preferably an encryption key. And more specifically, the encryption key may be a public key of the user that is registered on the server. The public key may not be stored for each and every user. However, once a user would like to be a recipient of access rights to a lock assigned to another user, a registration of the public key at the server is mandatory. Hence, in response to the access grant trigger, such as the pressing of a button on the GUI, an access grant request is sent to the server including an identifier of the other user, or the other device. Such identifier may, for example, be one of a name of the other user, a mobile device number of the other device, or other identification means by which the server may automatically determine which other device is to be granted access rights to. In response to the receipt of access grant request, the identifier, a successful identification of the subject other user / other device in the server, and an assigned encryption key deposited on the server, the server may send the subject encryption key to the access grant requesting device.

In response to the receipt of the encryption key at the device, the device preferably automatically generates the other token and sends the other token to the other device, via the server. In a preferred embodiment, the other token is generated by encrypting the digital key by the encryption key, and specifically by the public key of the other user. In addition it is preferred that access rights are submitted, in a non-encrypted format preferably in the same token with the digital key. While any access rights granted may lead to a guest tag assigned to the digital key in the other device, access rights different to the ones defined by the default guest tag may be transmitted in the other token. Such access rights may indicate terms of the access granted, such as duration, specific times, etc.

The sending of the other token from the device to the other device is routed via the server but is not intercepted by the server, except, in one embodiment, in the case of co-transferred access rights which the server may store and assign to the user profile and / or the profile of the other user. Since asymmetric encryption is preferably used for encrypting the digital key in the other token, the digital key may only be decrypted by a private key of the other user which only should be resident on the other device. Therefore, the server cannot decrypt the digital key from the other token and remains unaware of the digital key, and generally unaware of any digital key. The present system offers a maximum privacy and security to a user managing his / her locks and increases the users trust in the service. In addition, an attack on the server does not yield the digital keys to the attacker.

The assignment of the ownership tag to the digital key and the storing of at least this combination in the device is preferably performed during the initialization of the lock. In a preferred embodiment, after having energized the lock by applying power (e.g. a battery), the processing unit may send a lock broadcast message via the short-range wireless network, e.g. periodically.

When the device is within the range of the wireless network, the lock broadcast message is received. The lock broadcast indicates that it stems from a lock not yet assigned to a digital key. The device may then, in response to the lock request, and in response to a link trigger, which may include a user confirmation including on ownership identification for the lock, send, via the interface, a link request including the ownership identification back to the lock. The ownership identification may be e.g. a PIN or a different identifier that is assumed to be solely known by the owner of the lock, which can be assumed to be the owner of the device to connect to the lock. The ownership identification preferably is stored in the lock at the time of production, may be supplied to the buyer of the lock, i.e. the owner, e.g. by means of a sticker in the lock product, and is to be entered into the device e.g. with or in response to the link trigger, and / or the lock broadcast.

The processing unit of the lock, in response to receipt of the link request, compares the ownership identification transmitted from the device with the ownership identification stored in the lock. In case of a match, the lock preferably generates a digital key for the lock, which may be a random number in one embodiment, and which in the following shall represent the electronic key for locking and unlocking the lock. The digital key may be extended by a version number indicating the number of times a new digital key was generated by the lock. In this context, the digital key may include not only the random number but also the version number. A lock may only be operated by a device as long as the device is in the possession of the assigned digital key with the present version number. The lock sends a send key message to the device including the digital key of the lock. In response to the receipt of the send key message in the device, its processing unit derives the digital key from the message and stores it and assigns the ownership tag thereto, given that the digital key is transmitted from a lock the ownership identification for which lock was transmitted by the device, which proves that the device and its user respectively are the owner of the lock.

In connection with the initialization of the lock, e.g. in response to the link trigger, or in response to the send key message, the device may automatically transfer the ownership identifier PIN to the server, enabling the server to assign the lock identified by the ownership identifier to the user. The ownership identifier may at the time of production of the lock also be stored on the server. If the ownership identifier transmitted to the server matches to one of the stored ownership identifiers, the corresponding lock can be assigned to the user of the device, who is registered with the server, as owner.

As indicated above, the ownership tag in combination with the digital key resident in the device enable the device and its user not only to operate the lock but also to grant access to the lock to others.

Since there may be situations where the ownership of the lock no longer exists, or changes, or where the device is broken, the ownership tag can be released from the lock and its digital key respectively: In response to a release trigger, such as a user input via the GUI of the device, and preferably in combination with entering the ownership identifier for the lock in order to prove that it is actually the owner requesting the release, the processing unit of the device sends, via the interface, a release request including the ownership identification to the lock. In response to the release request, the lock verifies the ownership identification with the ownership identification stored in the lock, and in case of a match deletes the digital key from its storage or marks it invalid, and sets a status of the lock to yet unassigned, which in turn may trigger the sending of the lock broadcast message in the following.

The lock returns a release confirmation message to the device provided the ownership verification had a positive result. In response to the receipt of the release confirmation, the device releases the ownership tag - digital key assignment. The release of the ownership tag - digital key assignment includes one or more of the following: The digital key is marked as inactive in the device. The digital key is removed from the device. The ownership tag is removed. In addition, a release message may be sent from the device to the server which may be forwarded from there to the other devices having active access rights granted. In the server, the user profiles may be updated in response to the release message. Preferably, any access rights granted may be removed from the one or more other devices in response to the release message.

Unless removed by way of a release of the owner from the lock, access rights granted may preferably in addition or alternatively also removed by the device itself, and its user respectively. Here, a revoke trigger at the device preferably initiates revoking the enabling of the other mobile electronic device to operate the lock. In response to the revoke trigger, a revoke message is sent to other device, via the other interface. Typically, in response to the revoke message, the server removes the granted access rights in the respective profiles, and the other device, in response to the revoke messages automatically removes the digital key.

However, the other device requires to be energized, and / or the application needs to be opened in for a successful removal of the digital key. In case that the other device is not operated a long time, which may prevent the removal of the digital key on the other device, it is preferred that the lock is provided with a flag, also referred to as online connectivity flag. This flag preferably is stored in the lock during production, and requires, that a device not showing the ownership tag and yet trying to operate the lock, to reconnect to the server, before the lock actually operates. In response to such reconnection to the server, the digital key on the other device preferably is deleted, or access to the lock from the other device is disabled otherwise. The deletion of the digital key from the other device is performed given that the server was made aware of the revocation of rights from the device.

The embodiments referred to above are also applicable to other aspects of the present invention introduced as follows:
According to another aspect of the present invention, a method according to claim 8 is provided for a mobile electronic device enabling another electronic device to operate a lock already operable by the mobile electronic device. In response to a lock operation trigger, a token generated dependent on a digital key, is sent, via an interface to a short-range wireless network, to the lock. The digital key is stored in the mobile electronic device, is assigned to the lock and is capable to lock or unlock the assigned lock, and is assigned an ownership tag. In response to the token being sent, a lock status confirmation is received from the lock, via the interface, provided the lock is present in the range of the wireless network. In response to an access grant trigger, another token is generated by the device dependent on the digital key, and is sent, via another interface, to the other mobile electronic device to enable the assigned lock to be locked or unlocked at least temporarily by the other mobile electronic device. The other interface is an interface to another network. The digital key is stored in the mobile electronic device as digital key operable to lock or unlock the assigned lock as long as the digital key - ownership tag assignment is not released. In this method, the order of steps presented is not meant to represent a mandatory sequence: Hence, the granting of access rights to the other device not only has to take place after the lock is operated by the device. Rather, the lock can be operated at any time the user of the device wants to operate the lock, irrespective if this point in time is before or after access rights to the lock are granted to the other device, as long as the ownership tag - digital key relation is active on the device. Likewise the access rights can be granted before or after a lock operation, and in particular independent from any lock operation, subject to the user wanting to grant access rights, and again as long as the ownership tag - digital key relation is active on the device.

According to a further aspect of the present invention, a computer program code according to claim 9 is provided and configured to run a method according to any of the above embodiments, when executed by a processing unit of the mobile electronic device.

According to a further aspect of the present invention, a locking system according to claim 11 is introduced. The locking system includes a mobile electronic device, another mobile electronic device and a lock. In particular, the locking system may additionally include multiple locks assigned to a user of the device, and / or possible further mobile electronic devices of other users to be granted access rights to one or more of the locks. However, presently the system is described only with reference to one lock of out possible multiple locks.

The mobile electronic device includes an interface to a short-range wireless network, another interface to another network, a processing unit, and a digital key stored in the mobile electronic device for locking or unlocking an assigned lock. An ownership tag is assigned to the digital key. Both remain stored in the device. As long as this combination is stored and active in the device, the digital key stored on the device is operable to lock or unlock the assigned lock.

The lock in turn comprises an interface to the short-range wireless network, a processing unit, and the digital key stored in the lock.

The other mobile electronic device comprises an interface to a network connecting to the server, preferably via the Internet, and a processing unit, and preferably also an interface to the short-range wireless network in order to later on operate the lock it was granted access rights for.

The processing unit of the mobile electronic device is configured to, in response to a lock operation trigger, send, via the interface, a token generated dependent on the digital key to the lock. The processing unit of the lock is configured to, when present in the range of the wireless network, and in response to the token received via its interface, verify the token received by using i.a. the digital key stored in the lock, which preferably includes verifying a cryptographic operation on the token including the digital key, and, in response to a positive result of the verification, implements a locking or unlocking operation. In addition, the lock may, via the interface send a lock status confirmation to the mobile electronic device.

For granting access rights to the other device, the processing unit of the device is configured to, in response to an access grant trigger, send, via the other interface, another token generated dependent on the digital key to the other device to enable the assigned lock to be locked or unlocked at least temporarily by the other mobile electronic device. The processing unit of the other device is configured to, in response to receipt of the other token, extract the digital key and store it. Provided the other device has an interface to the short-range wireless network in order to connect to the lock, the other device now can lock or unlock the lock when at a distance from the lock enabling communication via the short-range wireless network; and provided, any access rights possibly transferred in combination with the digital key do not restrict a usage of the digital key.

According to a further aspect of the present invention, a lock is provided comprising an interface to a short-range wireless network, a processing unit, and a digital key stored in the lock, wherein the processing unit is configured to, in response to a token received via the interface, to verify the token by means of the digital key stored in the lock, which preferably includes verifying a cryptographic operation on the token including the digital key, and is configured to implement a locking or unlocking operation in case of a positive result of the verification.

According to a further aspect of the present invention, or as a preferred embodiment of the preceding aspect, the lock comprises the interface to the short-range wireless network and the processing unit, and an ownership identification stored in the lock. The processing unit is configured to, in response to a link request and an ownership identification received via the interface, verify the received ownership identification by means of the stored ownership identification, and in case of a positive result, which in particular is a match between the received and the stored ownership identification, generate a digital key, preferably including a version number. The processing unit further is preferably configured to submit the digital key including the version number if any, via the interface, to the link requesting device.

According to a further aspect of the present invention, or as a preferred embodiment of the preceding two aspects, the lock comprises the interface to the short-range wireless network and the processing unit, and the ownership identification and the digital key stored in the lock. The processing unit is configured to, in response to a release request and an ownership identification received via the interface, verify the received ownership identification by means of the stored ownership identification, and in case of a positive result, which in particular is a match between the received and the stored ownership identification, delete the digital key. The processing unit preferably is configured to, in response to a subsequent link request, generate a new digital key, preferably including an incremented version number.

In a similar but still different context of the present invention, the operation of the lock preferably is not performed by making use of a short range wireless network, e.g. in form of a Wireless Personal Area Network, as was the case so far. Instead, the operation of the lock makes use of a wireless Low Power Wide Area Network (LPWAN), also referred to as Low Power Network (LPN), and in a very preferred embodiment makes use of a wireless Long Range Wide Area Network (LoRaWAN), such as specified by the LoRa Alliance, to be found at https://www.lora-alliance.org/. In comparison to the WPAN technology, the LPWAN technology allows communicating over a long range which is in the order of kilometres, and preferably exceeds one kilometre. For this purpose, a corresponding infrastructure may be provided such as wireless access points in the range of one of which access points the lock preferably is to be located to be connected over the LPWAN. In addition, an LPWAN gateway may be provided for converting between e.g. the Internet protocol and the LPWAN protocol. A mobile electronic device that operates under this context of the present invention does not necessarily need an interface to a short range wireless network as in the previous aspects, although it may have. However, the communication between the device and the lock does not make use of such interface, but via the interface previously referred to as other interface, in the present context simply called interface, which interfaces with a network - previously called other network, which preferably grants access to the server via the Internet, and hence preferably includes a wireless telecommunications network or a wireless local area network. It is preferred, that the communication from the device to the lock takes the following route given that the mobile electronic device may not have an own LPWAN interface: From the device over its interface and a corresponding gateway to the Internet to the server, from the server via the Internet to an LPWAN gateway and to a corresponding LPWAN access point, and from thereon wireless to the lock. The communication from the lock to the device preferably takes the reversed route.

As a result, in the present context, the device does not to be in a common WPAN range together with the lock. Hence, the physical presence of the user of the device at or close by the lock is not required. Instead, only the lock is to be arranged in the range of a LPWAN access point, while the user of the device, and hence the device can be located anywhere and operate the lock from anywhere, as long as the device has access to the network.

Hence, according to another aspect of the invention, a mobile electronic device is provided, comprising the interface to a network connecting to the Internet. Again, a digital key is stored in the mobile electronic device for locking or unlocking an assigned lock, and an ownership tag is assigned to the digital key, wherein the digital key remains stored in the mobile electronic device as digital key operable to lock or unlock the assigned lock and transmittable to another mobile electronic device as long as the ownership tag - digital key assignment is not released. The processing unit of the device is now configured to, in response to a lock operation trigger, send, via the interface, a token generated dependent on the digital key, and is configured to, in response to the token being sent, receive, via the interface, a lock status confirmation from the lock. The transfer of access rights is not different to the previous aspects of the invention: The processing unit of the device is configured to, in response to an access grant trigger, send another token generated dependent on the digital key, via the interface, to another mobile electronic device to enable the assigned lock to be locked or unlocked at least temporarily by the other mobile electronic device.

According to a further aspect of the present invention, a method is provided for a mobile electronic device enabling another electronic device to operate a lock already operable by the mobile electronic device. In response to a lock operation trigger, a token generated dependent on a digital key is sent, via the interface, to the lock. The digital key is stored in the mobile electronic device, is assigned to the lock, is capable to operate the assigned lock, and is assigned with an ownership tag. In response to the token being sent, a lock status confirmation is received, via the interface, from the lock. In response to an access grant trigger, another token generated dependent on the digital key, is sent, via the interface, to the other mobile electronic device to enable the assigned lock to be operated at least temporarily by the other mobile electronic device. The digital key is stored in the mobile electronic device as digital key operable to lock or unlock the assigned lock and transmittable to the other mobile electronic device as long as the ownership tag - digital key assignment is not released.

According to a further aspect of the present invention, a computer program element is provided, comprising computer program code configured to run a method according to the preceding method when executed by a processing unit.

In the same context, according to another aspect of the present invention, a locking system is introduced, including a mobile electronic device comprising the interface to a network connecting to the Internet, the processing unit, and the digital key stored in the mobile electronic device for locking or unlocking an assigned lock. The lock comprises an interface to a wireless low power wide area network, a processing unit, and the digital key stored in the lock. Another mobile electronic device comprises an interface to a network connecting to the Internet, and a processing unit. The processing unit of the mobile electronic device is configured to, in response to a lock operation trigger, send, via the interface, a token generated dependent on the digital key to the lock. The processing unit of the lock is configured to, in response to the token received via its low power wide area network interface, verify the token by means of the digital key stored in the lock, which preferably includes verifying a cryptographic operation on the token including the digital key, and implement a locking or unlocking operation in case of a positive result of the verification, and is configured to, via the low power wide area network interface send a lock status confirmation to the mobile electronic device. The processing unit of the mobile electronic device is configured to, in response to an access grant trigger, send, via the interface, another token generated dependent on the digital key to the other mobile electronic device to enable the assigned lock to be locked or unlocked at least temporarily by the other mobile electronic device. The processing unit of the other mobile electronic device is configured to, in response to the receipt of the other token, extract the digital key and store it. The digital key remains stored in the mobile electronic device as digital key operable to lock or unlock the assigned lock and transmittable to the other mobile electronic device as long as the ownership tag - digital key assignment is not released.

According to a further aspect of the present invention, a lock is provided comprising an interface to a low power wide area network, a processing unit, and a digital key stored in the lock, wherein the processing unit is configured to, in response to a token received via the interface, verify the token by means of the digital key stored in the lock, which preferably includes verifying a cryptographic operation on the token including the digital key, and is configured to implement a locking or unlocking operation in case of a positive result of the verification.

According to a further aspect of the present invention, or as a preferred embodiment of the preceding aspect, the lock comprises the interface to the low power wide area network and the processing unit, and an ownership identification stored in the lock. The processing unit is configured to, in response to a link request and an ownership identification received via the interface, verify the received ownership identification by means of the stored ownership identification, and, in case of a positive result, which in particular is a match between the received and the stored ownership identification, generate a digital key, preferably including a version number. The processing unit further is preferably configured to submit the digital key including the version number if any, via the interface to the low power wide area network, to the link requesting device.

According to a further aspect of the present invention, or as a preferred embodiment of the preceding two aspects, the lock comprises the interface to the low power wide area network and the processing unit, and the ownership identification and the digital key stored in the lock. The processing unit is configured to, in response to a release request and an ownership identification received via the interface to the low power wide area network, verify the received ownership identification by means of the stored ownership identification, and, in case of a positive result, which in particular is a match between the received and the stored ownership identification, delete the digital key. The processing unit preferably is configured to, in response to a subsequent link request received via the interface to the low power wide area network, generate a new digital key, preferably including an incremented version number.

Other embodiments illustrated with respect to the short range wireless access to the lock are applicable and considered as disclosed also in connection with the LPWAN access to the lock, except that any communication preferably is routed via the Internet and the LPWAN to and from the lock.

Other advantageous embodiments are listed in the dependent claims as well as in the description below.

### Brief Description of the Drawings

Embodiments and advantages of the invention will be better understood and become apparent from the following detailed description thereof. Such description makes reference to the annexed drawings, wherein:
Fig. 1 illustrates a block diagram of a mobile electronic device according to an embodiment of the present invention;
Fig. 2 illustrates a locking system according to an embodiment of the present invention;
Fig. 3 illustrates a flow diagram between a mobile electronic device and a lock, contributing to a method according to an embodiment of the present invention;
Fig. 4 illustrates a flow diagram between a mobile electronic device, a server, and another mobile electronic device, contributing to a method according to an embodiment of the present invention; and
Fig. 5 illustrates a locking system according to an embodiment of the present invention.

### Modes for Carrying Out the Invention

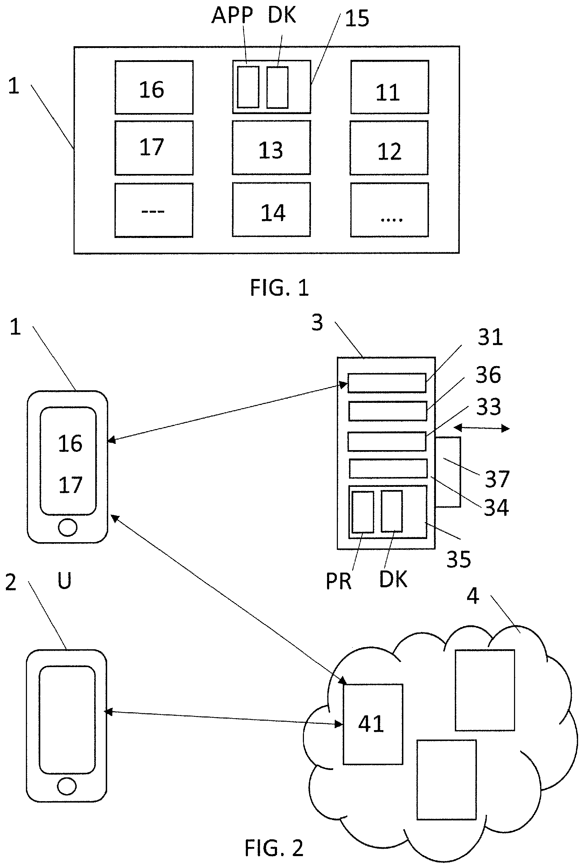

Fig. 1 illustrates a block diagram of a mobile electronic device 1 such as a smart phone. The device typically includes a housing (not shown), and arranged within the housing an energy supply 14 in form of a battery, a processing unit 13, and a memory 15 for storing data. Accordingly, the mobile electronic device 1 has computing capabilities. In order to enable communication with the device 1 the device 1 comprises one or more interfaces. Presently, the device 1 comprises an interface 11 to a short-term wireless network, such as Bluetooth or NFC, and another interface 12 to another wireless network, that preferably is a wide-range wireless network such as a 3G or 4G wireless network. The box with the dots within indicates that there may be one or more additional interfaces to other networks comprises in the mobile electronic device. While it is assumed that both networks the interfaces 11 and 12 connect to, are suited for data transmission, in case of a smart phone, for example, the other interface may also provide for voice communication.

The present device 1 also comprises a user interface in form of an input unit 16 and an output unit 17, which both are preferably implemented by means of a touchscreen.

The battery 14 preferably is rechargeable and provides energy to the various components of the device 1. There may be many more other components as is known from various smart phones and as is indicated by the box filled with dashes, however which other components do not seem to be of further relevance to embodiments of the present invention.

Given that the present device 1 is configured to wireless operate a lock, i.e. preferably to lock and unlock the lock, corresponding data and software elements are preferably provided, such as an application APP preferably comprising a suitable graphical user interface shown on the output unit 17, and a digital key DK assigned to the lock, and preferably capable to only lock and unlock the assigned lock but no other lock. Preferably, a set of digital keys is stored to operate further locks. The digital key and the application APP are preferably stored in a non-volatile memory 15 of the device. Preferably, the digital key is stored in a secure environment of the memory 15. In operation, the application APP is loaded into a main memory of the device (not shown). Its instructions are executed by the processing unit 13.

Given that the use of the present invention is in the field of contactless controlling locks, it is referred to an embodiment of a lock 3, a block diagram of which is shown inter alia in Fig. 2. The lock 3 preferably is built in a door, or other apparatus to be locked or otherwise prevented from access. It comprises a housing (not shown), and a bolt 37, which in state may be driven into an extended position such as indicated in FIG. 2 corresponding to a locked status of the lock, and which may be driven in a retracted position which may correspond to an unlocked status of the lock. Given that the lock 3 is electronically controlled, it is preferred that the lock 3 comprises a processing unit 33 that generates electrical control signals for locking and / or unlocking the lock 3. Such control signal preferably are converted into a corresponding extending or retracting movement of the bolt 37 by means of an electrical / mechanical actuator 36 such as an electric motor or magnet.

In addition, in order to communicate with the device 1 which transmits corresponding signals for locking or unlocking the lock 3, the lock 3 comprises an interface 31 to a short-range wireless network, and preferably to the same wireless network the device 1 is interfaced, too, by means of its interface 11. Given that the lock 3 shall operate the bolt 37 once a valid token TK is transmitted by the device 1, the lock 3 preferably includes a memory 35 where the digital key DK is stored. In addition, the memory 35 may include a stored program PR the instructions of which are executed by the processing unit 33, which program PR in one embodiment takes care of the data communication with the device 1, the evaluation of the digital key DK sent by the device 1, and the supply of control signals to the actuator 36.

The present scheme of Fig. 2 shows the mobile electronic device 1 in form of a smart phone, and another mobile electronic device 2 in form of another smart phone, the lock 3 as described above, and a server 41 being part of a cloud 4 representing remote computing and storage capabilities.

The arrow between the device 1 and the lock 3 indicates that data is transmitted there between for operating the lock 3 by the device 1. The data is transmitted via the short-range wireless network each of the device 1 and the lock 3 have an interface 11, 31 for.

Presently, the device 1, and specifically its user U, may want to allow the other device 2, and specifically its user V to also operate the lock 3. Hence, it is desired that the lock 3 can also be locked or unlocked by the other device 2, in addition to the device 1. For this purpose, the digital key DK is transferred from the device 1 to the other device 2. The arrows indicate that corresponding data is transmitted between the device 1 and the other device 2, however, via the other network to which other network each of the device 1 and the other device 2 have an interface 12 for (not explicitly shown for the other device 2). Preferably, the communication is performed via the server 41. The server 41 may include a software for administering the services of keyless locking und unlocking locks, may administer the application, may offer the application for download, may provide a user registration, etc.

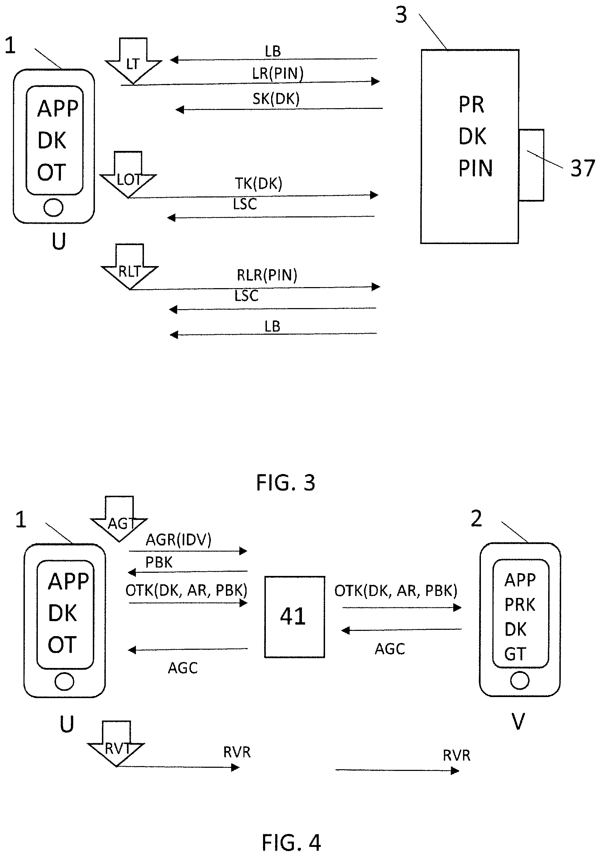

Fig. 3 illustrates a flow chart representing at least portions of a method according to embodiments of the present invention. In this chart, only messages exchanged via the short-range wireless network between the device 1 and the lock 3 are introduced, while the device 1 may also communicate via the other interface 12 to a server 41 and / or another device 2 as will be shown in Fig. 4.

The flow chart in FIG. 3 illustrates three different functions, the first one being a linking process linking a previously unassigned lock 3 to the device 1, while the second one being an operation of the lock 3 by the device 1. It is preferred that for both functions an application APP is already stored on the device 1, which application APP may be downloaded from the server 41 or elsewhere and is stored in the memory of the device 1. The application APP preferably enables the locking and unlocking of one or more assigned locks and parts their administration. Preferably, the application APP provides a graphical user interface GUI, e.g. on a touchscreen of the device 1, by which the user can trigger certain events.

The first communication illustrates the linking of a lock 3 yet unassigned to any owner. This process can also be referred to as initialization of the lock 3. For example, user U has acquired the lock 3 including the electronics required inside, has integrated the lock 3 into the desired apparatus such as a door, and has downloaded an application APP onto his / her mobile electronic device 1 for operating the lock 3. In one embodiment, the lock 3, after being energized, e.g. with a battery, sends out a lock broadcast message LB which implies that the lock 3 is still unassigned, i.e. has no owner. The lock broadcast message LB is broadcast repeated periodically in the short-range wireless network.

In response to the device 1 receiving the lock broadcast message LB, the application APP may be automatically started; alternatively, the application APP already is started such that a corresponding message can be shown to the user on the GUI of the device 1: A yet unassigned lock 3 is within the reach of the wireless network. In response, the user U of the device 1 may, e.g. by means of a link trigger LT on the GUI of the device 1, produce a link request LR sent from the device 1 to the lock 3. In one embodiment, in order to trigger the sending of the link request LR, the user U may need to enter an ownership identifier PIN which is transmitted to the lock 3 in combination with the link request LR. Such ownership identifier PIN may be supplied to the user U together with an acquisition of the lock 3, and at the same time is already stored in the lock 3 during production and remains permanently stored therein. In a different embodiment, the link trigger LT is sent without the ownership identifier PIN and the lock 3 request in response to the link trigger LT for entering the subject ownership identifier PIN at the device 1. Hence, the ownership identifier represents an authorization to engage with the lock 3, and hence to link a device 1 to the lock 3 as administrator for the lock 3. This process makes the user U become owner of the lock in the administration of the lock 3. In response to a receipt of the link request LR(PIN) including the ownership identifier, the lock 3 compares the received PIN to the stored PIN, and, in response to a match transmits a send key message SK including a digital key DK to the device 1 which digital key DK is preferably generated in response to a successful link request LR. The digital key DK preferably includes a version number indicating the number of times the digital key was generated for the subject lock.

In response to the device 1 receiving the send key SK message, the digital key DK is extracted, stored in a memory of the device 1, and an ownership tag OT is assigned to the digital key DK indicating that the presently stored digital key DK belongs to the owner of the lock 3. Such ownership tag OT - digital key DK assignment may represent an administrator relationship for the digital key DK, i.e. only this digital key DK authorizes to distribute access rights to the corresponding lock 3 to third parties, and authorizes to access the assigned lock 3 exclusively except for third parties granted access rights.

The second communication illustrated in FIG. 3 shows the operation of the lock 3 by means of the device 1. As a prerequisite, the device 1 requires to hold, e.g. in its memory, the digital key DK for the subject lock 3, e.g. amongst other digital keys for other locks the user U may own. Any such lock operation preferably is triggered by a lock operation trigger LOT via the GUI of the application APP or a connected device such as a watch, for example, indicating the need to operate the specific lock 3. In response to the lock operation trigger LOT, the lock 3 generates a lock random value that is sent to the device 1 (not shown). The device 1 generates a device random value and, in response to receiving the lock random value, combines the lock random value and the device random value, e.g. by joining the two random values, and applies a cryptographic operation on this combined random values, e.g. encrypts the combined random values by means of the digital key DK, which encrypted combination of random values represents the token TK(DK), which then is sent to the lock 3. In response to receiving the token TK(DK), the lock 3 applies a cryptographic operation, and in particular decrypts the token TK(DK), and especially decrypts the token TK(DK) by means of the locally stored digital key DK. As a result, the combined random values are available at the lock 3. In case the lock 3 can identify the lock random value submitted to the device 1 in the earlier communication, the token TK(DK) is identified as valid for executing the desired lock or unlock operation. For this purpose, of course, the lock 3 has stored the previously generated lock random value. This implies that the user U of the device 1 is authorized to operate the lock 3. In case the evaluation provides a positive result, the requested operation is performed by the lock 3, e.g. the lock or unlock operation. In response to the evaluation providing a positive result in the above evaluation, a lock status confirmation LSC is sent back to the device, e.g. indicating that the lock 3 now is locked, or unlocked respectively.

Generally, the lock operation trigger LOT may be specific as to lock or unlock the lock 3. This may be implemented by two different buttons on the GUI, or by a single button illustration e.g. in form of an icon representing the present status (locked or unlocked) of the lock 3. In the latter embodiment, by touching this icon, the operation to be triggered is defined at the same time, given that the lock operation trigger LOT is interpreted to change the present status of the lock 3, i.e. a presently unlocked lock 3 is to be locked, or a presently locked lock is to be unlocked in response to the lock operation trigger LOT.

The third communication illustrated in FIG. 3 shows the release of the ownership of the lock 3. In response to a release trigger RLT at the device 1, a corresponding release request RLR is sent from the device 1 to the lock 3. The release request preferably includes the ownership identifier PIN, which the user U may be prompted to input into the device prior to sending the release request RR. In response to the release request RLR, the lock 3 verifies the ownership identification PIN transmitted with the ownership identification PIN stored in the lock 3, and in case of a match deletes the digital key DK from its storage, and sets a status of the lock to yet unassigned, which in turn may trigger the sending of the lock broadcast message LB in the following. In addition, preferably a release confirmation LSC is sent back to the device 1. In response to the receipt of the release confirmation LSC, the device 1 may release the ownership tag OT - digital key DK assignment, and preferably delete both. In case of a new link request LR according to the first communication scheme, a new digital key is generated in the lock 3, preferably including a different random number, and the version counter in the digital key is incremented. In the following, only devices in possession of the new digital key including the correct present version number are permitted to operate the lock.

Fig. 4 illustrates two flow diagrams between a mobile electronic device, a server, and another mobile electronic device, contributing to a method according to an embodiment of the present invention. In this chart, only messages exchanged via a network, including a wireless network that, however, not necessarily includes the short-range wireless network between the device 1 and the lock 3, are introduced, while the devices 1 and 2 may also communicate via the interface to the short-range wireless network to one or more locks, such as is shown in Fig. 3.

The first communication illustrates the granting of access rights from the device 1 to another mobile electronic device 2. It is preferred for this process that an application APP is already stored on both of the devices 1 and 2. As introduced above, the application APP enables the locking and unlocking of one or more assigned locks and parts of their administration.

Access rights to the lock 3 shall be granted from the device 1 to the other device 2, wherein both devices are connected via a network to a server 41 at which the users U and V of both devices 1 and 2 have registered. The transfer of access rights is initiated by an access grant trigger AGT, by user U on device 1, e.g. by pressing a corresponding button on a touchscreen. Finally, this access grant trigger AGT triggers a submission of the digital key DK for the lock 3 the user U is owner of to the other user V in possession of the other device 2. Prior to this transfer, the user U needs to indicate to which other user V to transfer access rights. Such other user identification IDV, e.g. in form of a mobile phone number of user V, may be sent together with an access grant request AGR to the server 41. This access grant request AGR is verified in the server 41 which typically includes if the other user V is registered and has deposited an encryption key, such as public key PBK. In response to a successful access grant request AGR, the server 41 submits the public key PBK to the device 1. After having received the public key PBK, the device 1 generates another token OTK including the digital key DK encrypted by the public key PBK, possible further access rights AR more specifically defining the access granted. This other token OTK is sent to the server 41 and forwarded by the server 41 to the other device 2. The server may only access and store the additional access rights AR that are non-encrypted in the other token OTK. The other device 2, in response to the other token OTK received, decrypts the other token with its private key PRK, and stores the digital key DK and the access rights in its memory. In addition, or as alternative to the access rights AR, a guest tag GT may be assigned to the digital key DK indicating the guest status with respect to lock operations.

In response to a successful storage of the digital key DK, the other device 2 may return an access grant confirmation AGC that is forwarded by the server 41 to the device 1.

The second communication illustrated in FIG. 4 shows the revocation of the grant of access rights to the other device 2. A revoke trigger RVT at the device 1 preferably initiates revoking the enabling of the other mobile electronic device 2 to operate the lock 3. In response to the revoke trigger RVT, a revoke request RVR is sent from the device 1 to the server 41. In response to the revoke request RVR, the server 41 removes the granted access rights in the respective profiles, and forwards the revoke request RVR to the other device 2. In response to the receipt of the revoke request RVR in the other device 2, the digital key DK is automatically removed from the other device 2.

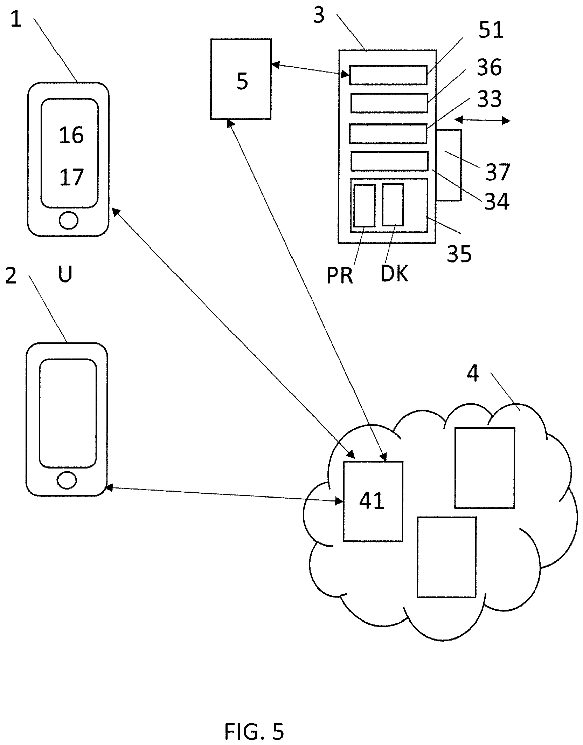

Fig. 5 illustrates an embodiment of a locking system according to another embodiment of the present invention. The elements are the same as in Fig. 2. However, there is no longer a direct interaction between the device 1 and the lock 3 via a WPAN network. Instead, the device 1 communicates with the lock 3 via the Internet, the server 41, and in addition via a LPWAN gateway 5 including an access point, which in turn communicates wireless with the lock 3, which may preferably is arranged within the range of the LPWAN, e.g. within 10 km radius from the LPWAN gateway 5.

## Claims

1. Mobile electronic device (1), comprising
- an interface (11) to a short-range wireless network,
- another interface (12) to another network,
- a digital key (DK) stored in the mobile electronic device (1) for locking or unlocking an assigned lock (3),
- an ownership tag (OT) assigned to the digital key (DK),
- a processing unit (13) configured to, in response to a lock operation trigger (LOT), send, via the interface (11), a token (TK) generated dependent on the digital key (DK), and configured to, in response to the token (TK1) being sent, receive, via the interface (11), a lock status confirmation (LSC) from the lock (3) when present in the range of the wireless network,
- wherein the processing unit (13) is configured to, in response to an access grant trigger (AGT), send an identifier (IDV) of another user (V) to a server (41) registering users (U,V) of the locking system including an associate encryption key,
- wherein the processing unit (13) is configured to, in response to sending the identifier (IDV) to the server (41), receive from the server (41), via the other interface (12), an encryption key assigned to the other user (V) of another mobile electronic device (2),
- wherein the processing unit (13) is configured to, in response to the receipt of the encryption key, generate another token (OTK) dependent on the digital key (DK) and the encryption key (PBK),
- wherein the processing unit (13) is configured to, send the other token (OTK), via the other interface (12), via the server (41), to another mobile electronic device (2) to enable the assigned lock (3) to be locked or unlocked at least temporarily by the other mobile electronic device (2),
- wherein the digital key (DK) remains stored in the mobile electronic device (1) as digital key (DK) operable to lock or unlock the assigned lock (3) and transmittable to the other mobile electronic device (2) as long as the ownership tag (OT) - digital key (DK) assignment is not released,
- wherein the processing unit (13) is configured to, in response to a release trigger (RLT), send, via the interface (11), a release request (RR) including an ownership identification (PIN) to the lock (3) to have the lock (3) to verify the ownership identification (PIN) with the ownership identification stored in the lock (3), and in case of a match to delete the digital key from its storage or to mark it invalid, and to set a status of the lock to yet unassigned, and to return a release confirmation (LSC) to the Z mobile electronic device (1) provided the ownership verification has a positive result,
- wherein the processing unit (13) is configured to, in response to the receipt of the release confirmation (LSC), release the ownership tag (OT)- digital key (DK) assignment by one or more of:
- marking the digital key (DK) as inactive;
- removing the digital key (DK) from the mobile electronic device (1);
- removing the ownership tag (OT).

2. Mobile electronic device (1) according to claim 1,
wherein the encryption key is a public key (PBK).

3. Mobile electronic device (1) according to claim 2,
wherein the processing unit (13) is configured to generate the other token (OT) including encrypting the digital key (DK) by the encryption key (PBK) and providing related non-encrypted access rights (AR).

4. Mobile electronic device (1) according to any one of the preceding claims,
wherein the processing unit (13) is configured to, in response to the other token (OTK) being sent, receive an access status confirmation (ASC) from the other mobile electronic device (2).

5. Mobile electronic device (1) according to any one of the preceding claims,
wherein for linking to a lock (3) yet unassigned to an owner the processing unit (13) is configured to, in response to a link trigger (LT), send, via the interface (11), a link request (LR) including an ownership identification (PIN), is configured to, in response to the link request (LR) being sent, receive, via the interface (11), the digital key (DK), and is configured to, in response to the receipt of the digital key (DK) store the digital key (DK) in the mobile electronic device (1) and assign the ownership tag (OT) to the digital key (DK).

6. Mobile electronic device (1) according to claim 5,
wherein the processing unit (13), prior to receiving the digital key (DK), is configured to receive a lock broadcast message (LB) from the lock (3) indicating a lock (3) not yet assigned to a digital key (DK).

7. Mobile electronic device (1) according to any one of the preceding claims,
wherein the processing unit (13), in response to a revoke trigger (RVT) for revoking the enabling of the other mobile electronic device (2) to operate the lock (3), is configured to send, via the other interface (12) a revoke message (RMS).

8. Method for a mobile electronic device (1) enabling another electronic device (2) to operate a lock (3) already operable by the mobile electronic device (1), comprising
- in response to a lock operation trigger (LOT), sending a token (TK) generated dependent on a digital key (DK), via an interface (11), to the lock (3), which digital key (DK) is
- stored in the mobile electronic device (1),
- assigned to the lock (3) and is capable to operate the assigned lock (3), and
- assigned with an ownership tag (OT),
and which interface (11) is an interface to a short-range wireless network,
- in response to the token (TK) being sent, receiving, via the interface (11), a lock status confirmation (LSC) from the lock (3) when present in the range of the wireless network,
- in response to an access grant trigger (AGT), sending an identifier (IDV) of another user (V) to a server (41) registering users (U,V) of the locking system including an associate encryption key,
- in response to sending the identifier (IDV) to the server (41), receiving from the server (41), via the other interface (12) an encryption key assigned to the other user (V) of another mobile electronic device (2),
- in response to the receipt of the encryption key, generating another token (OTK) generated dependent on the digital key (DK) and the encryption key, and
- sending the other token (OTK), via another interface (12), via the server (41) to the other mobile electronic device (2) to enable the assigned lock (3) to be operated at least temporarily by the other mobile electronic device (2), which other interface (12) is an interface to another network,
- storing the digital key (DK) in the mobile electronic device (1) as digital key (DK) operable to lock or unlock the assigned lock (3) and transmittable to the other mobile electronic device (2) as long as the ownership tag (OT) - digital key (DK) assignment is not released,
- in response to a release trigger (RLT), sending, via the interface (11), a release request (RR) including an ownership identification (PIN) to the lock (3) to have the lock (3) to verify the ownership identification (PIN) with the ownership identification stored in the lock (3), and in case of a match to delete the digital key from its storage or to mark it invalid, and to set a status of the lock to yet unassigned, and to return a release confirmation (LSC) to the device provided the ownership verification has a positive result,
- in response to the receipt of the release confirmation (LSC), release the ownership tag (OT)- digital key (DK) assignment by one or more of:
- marking the digital key (DK) as inactive;
- removing the digital key (DK) from the mobile electronic device (1);
- removing the ownership tag (OT).

9. Computer program element, comprising computer program code configured to run a method according to claim 8 when executed by a processing unit.

10. Locking system, including
- a mobile electronic device (1), comprising an interface (11) to a short-range wireless network, another interface (12) to another network, a processing unit (13), and a digital key (DK) stored in the mobile electronic device (1) for locking or unlocking an assigned lock (3),
- the lock (3), comprising an interface (31) to the short-range wireless network, a processing unit (33), and the digital key (DK) stored in the lock (3),
- another mobile electronic device (2), comprising an interface to the other network, and a processing unit,
- a server (41) configured to connect to the mobile electronic device (1) and the other mobile electronic device (2) via the other network,
- wherein the processing unit (13) of the mobile electronic device (1) is configured to, in response to a lock operation trigger (LOT), send, via the interface (11), a token (TK) generated dependent on the digital key (DK) to the lock (3),
- wherein the processing unit (33) of the lock (3) is configured to, when present in the range of the wireless network, in response to the token (TK) received via its interface (31), verify the token (TK) by means of the digital key (DK) stored in the lock (3) and implement a locking or unlocking operation in case of a positive result of the verification, and is configured to, via the interface (31), send a lock status confirmation (LSC) to the mobile electronic device (1),
- wherein the processing unit (13) of the mobile electronic device (1) is configured to, in response to an access grant trigger (AGT), send, via the other interface (12), another token (OTK) generated dependent on the digital key (DK) to the other mobile electronic device (2) to enable the assigned lock (3) to be locked or unlocked at least temporarily by the other mobile electronic device (2),
- wherein the processing unit of the other mobile electronic device (2) is configured to, in response to the receipt of the other token (OTK), extract the digital key (DK) and store it,
- wherein the digital key (DK) remains stored in the mobile electronic device (1) as digital key (DK) operable to lock or unlock the assigned lock (3) and transmittable to the other mobile electronic device (2) as long as the ownership tag (OT)- digital key (DK) assignment is not released,
wherein users (U,V) of the locking system are registered in the server (41) including an associate encryption key,
wherein the processing unit (13) of the mobile electronic device (3) is configured to, in response to the access grant trigger (AGT), send an identifier (IDV) of the other user (V) to the server (41),
wherein the server (41) is configured to, in response to receiving the identifier (IDV), sending an encryption key (PBK) assigned to the other user (V) to the mobile electronic device (1),
wherein the processing unit (13) of the electronic mobile device (1) is configured to, in response to the receipt of the encryption key, generate the other token (OTK) dependent on the digital key (DK) and the encryption key (PBK), and to send the other token (OTK) to the server (41),
wherein the server (41) is configured to forward the other token (OTK) to the other mobile electronic device (2) without intercepting the encrypted digital key (DK) in the other token (OTK),
- wherein the processing unit (13) of the electronic mobile device (1) is configured to, in response to a release trigger (RLT), send, via the interface (11), a release request (RR) including an ownership identification (PIN) to the lock (3),
- wherein the lock (3) is configured to verify the ownership identification (PIN) with the ownership identification stored in the lock (3), and in case of a match to delete the digital key from its storage or to mark it invalid, and to set a status of the lock to yet unassigned, and to return a release confirmation (LSC) to the mobile electronic device provided the ownership verification has a positive result,
- wherein the processing unit (13) of the electronic mobile device (1) is configured to, in response to the receipt of the release confirmation (LSC), release the ownership tag (OT)- digital key (DK) assignment by one or more of:
- marking the digital key (DK) as inactive;
- removing the digital key (DK) from the mobile electronic device (1);
- removing the ownership tag (OT).

11. Locking system according to claim 10,
wherein the encryption key is a public key (PBK) of an asymmetric private key (PRK) - public key (PBL) pair of the other user (V),
wherein the processing unit (13) of the mobile electronic device (1) is configured to encrypt the digital key (DK) by means of the public key (PBK),
wherein the processing unit of the other mobile electronic device (2) is configured to decrypt the other token (OTK) by the private key (PRK).

12. Locking system according to any one of the preceding claims 10 or 11,
wherein the processing unit (13) of the mobile electronic device (1) is configured to generate the other token (OTK) by including non-encrypted access rights (AR) related to the digital key (DK),
wherein in response to decrypting the digital key (DK) in the other mobile electronic device (2), the digital key (DK) is stored in the other mobile electronic device (2) in combination with the access rights.

## Patentansprüche

1. Mobile elektronische Vorrichtung (1), umfassend
- eine Schnittstelle (11) zu einem drahtlosen Netzwerk mit kurzer Reichweite,
- eine weitere Schnittstelle (12) zu einem anderen Netzwerk,
- einen in der mobilen elektronischen Vorrichtung (1) gespeicherten digitalen Schlüssel (DK) zum Ver- oder Entriegeln eines zugeordneten Schlosses (3),
- ein Eigentums-Tag (OT), das dem digitalen Schlüssel (DK) zugeordnet ist,
- eine Verarbeitungseinheit (13), die so konfiguriert ist, dass sie als Reaktion auf einen Verriegelungsoperationsauslöser (LOT) über die Schnittstelle (11) ein Token (TK) sendet, das in Abhängigkeit von dem digitalen Schlüssel (DK) erzeugt wird, und so konfiguriert ist, dass sie als Reaktion auf das Senden des Tokens (TK1) über die Schnittstelle (11) eine Verriegelungsstatusbestätigung (LSC) vom Schloss (3) empfängt, wenn es sich in der Reichweite des drahtlosen Netzwerks befindet,
- wobei die Verarbeitungseinheit (13) so konfiguriert ist, dass sie als Reaktion auf einen Zugriffsgewährungsauslöser (AGT) eine Kennung (IDV) eines anderen Benutzers (V) an einen Server (41) sendet, der Benutzer (U, V) des Schliesssystems einschliesslich eines zugehörigen Verschlüsselungscodes registriert,
- wobei die Verarbeitungseinheit (13) so konfiguriert ist, dass sie in Reaktion auf das Senden der Kennung (IDV) an den Server (41) vom Server (41) über die andere Schnittstelle (12) einen Verschlüsselungsschlüssel empfängt, der dem anderen Benutzer (V) einer anderen mobilen elektronischen Vorrichtung (2) zugeordnet ist,
- wobei die Verarbeitungseinheit (13) so konfiguriert ist, dass sie als Reaktion auf den Empfang des Verschlüsselungsschlüssels ein anderes Token (OTK) in Abhängigkeit vom digitalen Schlüssel (DK) und dem Verschlüsselungsschlüssel (PBK) erzeugt,
- wobei die Verarbeitungseinheit (13) so konfiguriert ist, dass sie den anderen Token (OTK) über die andere Schnittstelle (12) über den Server (41) an eine andere mobile elektronische Vorrichtung (2) sendet, um zu ermöglichen, dass das zugeordnete Schloss (3) zumindest vorübergehend durch die andere mobile elektronische Vorrichtung (2) verriegelt oder entriegelt wird,
- wobei der digitale Schlüssel (DK) in der mobilen elektronischen Vorrichtung (1) als digitaler Schlüssel (DK) zum Ver- oder Entriegeln des zugeordneten Schlosses (3) gespeichert bleibt und an die andere mobile elektronische Vorrichtung (2) übertragbar ist, solange die Zuordnung Eigentums-Tag (OT) - digitaler Schlüssel (DK) nicht aufgehoben ist,
- wobei die Verarbeitungseinheit (13) dazu konfiguriert ist, als Reaktion auf einen Freigabeauslöser (RLT) eine Freigabeanforderung (RR) einschliesslich einer Eigentümeridentifikation (PIN) über die Schnittstelle (11) an das Schloss (3) zu senden, damit das Schloss (3) die Eigentümeridentifikation (PIN) mit der im Schloss (3) gespeicherten Eigentümeridentifikation verifiziert, und im Falle einer Übereinstimmung den digitalen Schlüssel aus seinem Speicher zu löschen oder als ungültig zu markieren und einen Status des Schlosses auf noch nicht signiert zu setzen und eine Freigabebestätigung (LSC) an die mobile elektronische Vorrichtung (1) zurückzusenden, sofern die Eigentumsüberprüfung ein positives Ergebnis hat,
- wobei die Verarbeitungseinheit (13) so konfiguriert ist, dass sie als Reaktion auf den Empfang der Freigabebestätigung (LSC) die Zuordnung von Eigentums-Tag (OT) und digitalem Schlüssel (DK) durch einen oder mehrere der folgenden Schritte freigibt
- Kennzeichnen des digitalen Schlüssels (DK) als inaktiv;
- Entfernen des digitalen Schlüssels (DK) von der mobilen elektronischen Vorrichtung (1);
- Entfernen des Eigentums-Tags (OT).

2. Mobile elektronische Vorrichtung (1) nach Anspruch 1,
wobei der Verschlüsselungsschlüssel ein öffentlicher Schlüssel (PBK) ist.

3. Mobile elektronische Vorrichtung (1) nach Anspruch 2,
wobei die Verarbeitungseinheit (13) so konfiguriert ist, dass sie das andere Token (OT) erzeugt, einschliesslich der Verschlüsselung des digitalen Schlüssels (DK) durch den Verschlüsselungsschlüssel (PBK) und der Bereitstellung zugehöriger nicht verschlüsselter Zugriffsrechte (AR).

4. Mobile elektronische Vorrichtung (1) nach einem der vorangehenden Ansprüche,
wobei die Verarbeitungseinheit (13) so konfiguriert ist, dass sie in Reaktion auf das Senden des anderen Tokens (OTK) eine Zugriffsstatusbestätigung (ASC) von der anderen mobilen elektronischen Vorrichtung (2) empfängt.

5. Mobile elektronische Vorrichtung (1) nach einem der vorangehenden Ansprüche,
wobei zum Verbinden mit einem Schloss (3), das noch nicht einem Eigentümer zugeordnet ist, die Verarbeitungseinheit (13) so konfiguriert ist, dass sie als Reaktion auf einen Verbindungsauslöser (LT) über die Schnittstelle (11) eine Verbindungsanforderung (LR) einschliesslich einer Eigentümeridentifikation (PIN) sendet, so konfiguriert ist, dass sie als Reaktion auf das Senden der Verbindungsanforderung (LR) über die Schnittstelle (11) den digitalen Schlüssel (DK) empfängt, und ist konfiguriert, um als Reaktion auf den Empfang des digitalen Schlüssels (DK) den digitalen Schlüssel (DK) in der mobilen elektronischen Vorrichtung (1) zu speichern und den Eigentums-Tag (OT) dem digitalen Schlüssel (DK) zuzuordnen.

6. Mobile elektronische Vorrichtung (1) nach Anspruch 5,
wobei die Verarbeitungseinheit (13) vor dem Empfang des digitalen Schlüssels (DK) so konfiguriert ist, dass sie eine Schloss-Rundrufnachricht (LB) vom Schloss (3) erneut empfängt, die ein Schloss (3) anzeigt, das noch nicht einem digitalen Schlüssel (DK) zugeordnet ist.

7. Mobile elektronische Vorrichtung (1) nach einem der vorangehenden Ansprüche,
wobei die Verarbeitungseinheit (13) so konfiguriert ist, dass sie als Reaktion auf einen Widerrufstrigger (RVT) zum Widerruf der Berechtigung der anderen mobilen elektronischen Vorrichtung (2), das Schloss (3) zu bedienen, über die andere Schnittstelle (12) eine Widerrufsmeldung (RMS) sendet.

8. Verfahren für eine mobile elektronische Vorrichtung (1), das es einer anderen elektronischen Vorrichtung (2) ermöglicht, ein bereits durch die mobile elektronische Vorrichtung (1) bedienbares Schloss (3) zu bedienen, umfassend
- als Reaktion auf einen Auslöser (LOT) für die Bedienung des Schlosses, Senden eines Tokens (TK), der in Abhängigkeit von einem digitalen Schlüssel (DK) erzeugt wird, über eine Schnittstelle (11) an das Schloss (3), wobei der digitale Schlüssel (DK)
- in der mobilen elektronischen Vorrichtung (1) gespeichert ist,
- dem Schloss (3) zugeordnet und in der Lage ist, das zugeordnete Schloss (3) zu bedienen, und
- mit einem Eigentums-Tag (OT) versehen ist, und welche Schnittstelle (11) eine Schnittstelle zu einem drahtlosen Netzwerk mit kurzer Reichweite ist,
- als Reaktion auf das Senden des Tokens (TK), Empfangen einer Schlossstatusbestätigung (LSC) vom Schloss (3) über die Schnittstelle (11), wenn es sich in der Reichweite des drahtlosen Netzwerks befindet,
- als Reaktion auf einen Zugriffsgewährungsauslöser (AGT), Senden einer Kennung (IDV) eines anderen Benutzers (V) an einen Server (41), der Benutzer (U, V) des Schliesssystems einschliesslich eines zugehörigen Verschlüsselungsschlüssels registriert,
- als Reaktion auf das Senden der Kennung (IDV) an den Server (41), Empfangen eines dem anderen Benutzer (V) einer anderen mobilen elektronischen Vorrichtung (2) zugeordneten Verschlüsselungsschlüssels vom Server (41) über die andere Schnittstelle (12),
- als Reaktion auf den Empfang des Verschlüsselungsschlüssels, Erzeugen eines anderen Tokens (OTK), der in Abhängigkeit vom digitalen Schlüssel (DK) und dem Verschlüsselungsschlüssel erzeugt wird, und
- Senden des anderen Tokens (OTK) über eine andere Schnittstelle (12) über den Server (41) an die andere mobile elektronische Vorrichtung (2), um zu ermöglichen, dass das zugewiesene Schloss (3) zumindest vorübergehend von der anderen mobilen elektronischen Vorrichtung (2) bedient werden kann, wobei die andere Schnittstelle (12) eine Schnittstelle zu einem anderen Netzwerk ist,
- Speichern des digitalen Schlüssels (DK) in der mobilen elektronischen Vorrichtung (1) als digitaler Schlüssel (DK), der zum Ver- oder Entriegeln des zugeordneten Schlosses (3) betätigbar ist und an die andere mobile elektronische Vorrichtung (2) übertragbar ist, solange die Zuordnung Eigentums-Tag (OT) - digitaler Schlüssel (DK) nicht aufgehoben ist,
- Senden als Reaktion auf einen Freigabeauslöser (RLT) eine Freigabeanforderung (RR) mit einer Eigentümeridentifikation (PIN) über die Schnittstelle (11) an das Schloss (3), damit das Schloss (3) die Eigentümeridentifikation (PIN) mit der im Schloss (3) gespeicherten Eigentümeridentifikation verifiziert, und im Falle einer Übereinstimmung den digitalen Schlüssel aus seinem Speicher zu löschen oder als ungültig zu markieren und einen Status des Schlosses auf noch nicht signiert zu setzen und eine Freigabebestätigung (LSC) an die Vorrichtung zurückzusenden, sofern die Eigentumsüberprüfung ein positives Ergebnis hat,
- als Reaktion auf den Empfang der Freigabebestätigung (LSC) die Zuordnung von Eigentums-Tag (OT) und digitalem Schlüssel (DK) durch eines oder mehrere der folgenden Verfahren freizugeben:
- Kennzeichnen des digitalen Schlüssels (DK) als inaktiv;
- Entfernen des digitalen Schlüssels (DK) von der mobilen elektronischen Vorrichtung (1);
- Entfernen des Eigentums-Tags (OT).

9. Computerprogrammelement, das einen Computerprogrammcode umfasst, der so konfiguriert ist, dass er ein Verfahren nach Anspruch 8 ausführt, wenn er von einer Verarbeitungseinheit ausgeführt wird.

10. Schliesssystem, umfassend
- eine mobile elektronische Vorrichtung (1), die eine Schnittstelle (11) zu einem drahtlosen Netzwerk mit kurzer Reichweite, eine weitere Schnittstelle (12) zu einem anderen Netzwerk, eine Verarbeitungseinheit (13) und einen in der mobilen elektronischen Vorrichtung (1) gespeicherten digitalen Schlüssel (DK) zum Ver- oder Entriegeln eines zugeordneten Schlosses (3) umfasst,
- das Schloss (3), umfassend eine Schnittstelle (31) zum drahtlosen Netzwerk mit kurzer Reichweite, eine Verarbeitungseinheit (33) und den im Schloss (3) gespeicherten digitalen Schlüssel (DK),
- eine andere mobile elektronische Vorrichtung (2), die eine Schnittstelle zum anderen Netzwerk und eine Verarbeitungseinheit umfasst,
- einen Server (41), der so konfiguriert ist, dass er mit der mobilen elektronischen Vorrichtung (1) und der anderen mobilen elektronischen Vorrichtung (2) über das andere Netzwerk verbunden ist,
- wobei die Verarbeitungseinheit (13) der mobilen elektronischen Vorrichtung (1) so konfiguriert ist, dass sie in Reaktion auf einen Auslöser (LOT) für einen Schliessvorgang über die Schnittstelle (11) ein in Abhängigkeit vom digitalen Schlüssel (DK) erzeugtes Token (TK) an das Schloss (3) sendet,
- wobei die Verarbeitungseinheit (33) des Schlosses (3) dazu konfiguriert ist, bei Anwesenheit in der Reichweite des drahtlosen Netzwerks in Reaktion auf den über ihre Schnittstelle (31) empfangenen Token (TK) den Token (TK) mittels des im Schloss (3) gespeicherten digitalen Schlüssels (DK) zu verifizieren und bei positivem Ergebnis der Verifikation einen Ver- oder Entriegelungsvorgang durchzuführen, und dazu konfiguriert ist, über die Schnittstelle (31) eine Schlossstatusbestätigung (LSC) an die mobile elektronische Vorrichtung (1) zu senden,
- wobei die Verarbeitungseinheit (13) der mobilen elektronischen Vorrichtung (1) so konfiguriert ist, dass sie in Reaktion auf einen ZugriffsgewährungsTrigger (AGT) über die andere Schnittstelle (12) ein weiteres Token (OTK), das in Abhängigkeit vom digitalen Schlüssel (DK) erzeugt wurde, an die andere mobile elektronische Vorrichtung (2) sendet, um zu ermöglichen, dass das zugewiesene Schloss (3) zumindest vorübergehend durch die andere mobile elektronische Vorrichtung (2) ver- oder entriegelt wird,
- wobei die Verarbeitungseinheit der anderen mobilen elektronischen Vorrichtung (2) konfiguriert ist, um in Reaktion auf den Empfang des anderen Tokens (OTK) den digitalen Schlüssel (DK) zu extrahieren und zu speichern,
- wobei der digitale Schlüssel (DK) in der mobilen elektronischen Vorrichtung (1) als digitaler Schlüssel (DK) zum Ver- oder Entriegeln des zugewiesenen Schlosses (3) gespeichert bleibt und an die andere mobile elektronische Vorrichtung (2) übertragbar ist, solange die Zuordnung Eigentums-Tag (OT) - digitaler Schlüssel (DK) nicht aufgehoben ist,
wobei Benutzer (U,V) des Schliesssystems einschliesslich eines zugehörigen Verschlüsselungsschlüssels im Server (41) registriert sind,
wobei die Verarbeitungseinheit (13) der mobilen elektronischen Vorrichtung (3) so konfiguriert ist, dass sie in Reaktion auf den Zugriffsgewährungstrigger (AGT) eine Kennung (IDV) des anderen Benutzers (V) an den Server (41) sendet,
wobei der Server (41) so konfiguriert ist, dass er als Reaktion auf den Empfang der Kennung (IDV) einen dem anderen Benutzer (V) zugewiesenen Verschlüsselungsschlüssel (PBK) an die mobile elektronische Vorrichtung (1) sendet,
wobei die Verarbeitungseinheit (13) der mobilen elektronischen Vorrichtung (1) so konfiguriert ist, dass sie in Reaktion auf den Empfang des Verschlüsselungsschlüssels den anderen Token (OTK) in Abhängigkeit vom digitalen Schlüssel (DK) und dem Verschlüsselungsschlüssel (PBK) erzeugt und den anderen Token (OTK) an den Server (41) sendet,
wobei der Server (41) so konfiguriert ist, dass er den anderen Token (OTK) an die andere mobile elektronische Vorrichtung (2) weiterleitet, ohne den verschlüsselten digitalen Schlüssel (DK) im anderen Token (OTK) abzufangen,
- wobei die Verarbeitungseinheit (13) der mobilen elektronischen Vorrichtung (1) so konfiguriert ist, dass sie als Reaktion auf einen Freigabeauslöser (RLT) über die Zwischenschnittstelle (11) eine Freigabeanforderung (RR) einschliesslich einer Eigentümeridentifikation (PIN) an das Schloss (3) sendet,
- wobei das Schloss (3) so konfiguriert ist, dass es die Eigentümeridentifikation (PIN) mit der im Schloss (3) gespeicherten Eigentümeridentifikation verifiziert und im Falle einer Übereinstimmung den digitalen Schlüssel aus seinem Speicher löscht oder ihn als ungültig markiert und einen Status des Schlosses auf noch nicht zugewiesen setzt und eine Freigabebestätigung (LSC) an die mobile elektronische Vorrichtung zurücksendet, sofern die Eigentümerverifizierung ein positives Ergebnis hat,
- wobei die Verarbeitungseinheit (13) der mobilen elektronischen Vorrichtung (1) so konfiguriert ist, dass sie in Reaktion auf den Empfang der Freigabebestätigung (LSC) die Zuordnung von Eigentums-Tag (OT) und digitalem Schlüssel (DK) durch einen oder mehrere der folgenden Schritte freigibt:
- Kennzeichnen des digitalen Schlüssels (DK) als inaktiv;
- Entfernen des digitalen Schlüssels (DK) von der mobilen elektronischen Vorrichtung (1);
- Entfernen des Eigentums-Tags (OT).

11. Schliesssystem nach Anspruch 10,
wobei der Verschlüsselungsschlüssel ein öffentlicher Schlüssel (PBK) eines asymmetrischen Paares aus privatem Schlüssel (PRK) und öffentlichem Schlüssel (PBL) des anderen Benutzers (V) ist,
wobei die Verarbeitungseinheit (13) der mobilen elektronischen Vorrichtung (1) so konfiguriert ist, dass sie den digitalen Schlüssel (DK) mit Hilfe des öffentlichen Schlüssels (PBK) verschlüsselt,
wobei die Verarbeitungseinheit der anderen mobilen elektronischen Vorrichtung (2) so konfiguriert ist, dass sie den anderen Token (OTK) mit dem privaten Schlüssel (PRK) entschlüsselt.

12. Schliesssystem nach einem der vorangehenden Ansprüche 10 oder 11,
wobei die Verarbeitungseinheit (13) der mobilen elektronischen Vorrichtung (1) so konfiguriert ist, dass sie den anderen Token (OTK) erzeugt, indem sie nicht verschlüsselte Zugriffsrechte (AR) in Bezug auf den digitalen Schlüssel (DK) einschliesst,
wobei als Reaktion auf das Entschlüsseln des digitalen Schlüssels (DK) in der anderen mobilen elektronischen Vorrichtung (2) der digitale Schlüssel (DK) in der anderen mobilen elektronischen Vorrichtung (2) in Kombination mit den Zugriffsrechten gespeichert wird.

## Revendications

1. Dispositif électronique mobile (1), comprenant
- une interface (11) vers un réseau sans fil à courte portée,
- une autre interface (12) vers un autre réseau,
- une clé numérique (DK) stockée dans le dispositif électronique mobile (1) pour verrouiller ou déverrouiller un verrou attribuée (3),
- une étiquette de propriété (OT) attribuée à la clé numérique (DK),
- une unité de traitement (13) configurée pour, en réponse à un déclencheur d'opération de verrouillage (LOT), envoyer, via l'interface (11), un jeton (TK) généré en fonction de la clé numérique (DK), et configurée pour, en réponse à l'envoi du jeton (TK1), recevoir, via l'interface (11), une confirmation d'état de verrouillage (LSC) du verrou (3) lorsqu'elle est présente dans la portée du réseau sans fil,
- dans lequel l'unité de traitement (13) est configurée pour, en réponse à un déclencheur d'octroi d'accès (AGT), envoyer un identifiant (IDV) d'un autre utilisateur (V) à un serveur (41) enregistrant les utilisateurs (U, V) du système de verrouillage, y compris une clé de cryptage associée,
- dans lequel l'unité de traitement (13) est configurée pour, en réponse à l'envoi de l'identifiant (IDV) au serveur (41), recevoir du serveur (41), via l'autre interface (12), une clé de chiffrement associée à l'autre utilisateur (V) d'un autre dispositif électronique mobile (2),
- dans lequel l'unité de traitement (13) est configurée pour, en réponse à la réception de la clé de cryptage, générer un autre jeton (OTK) en fonction de la clé numérique (DK) et de la clé de cryptage (PBK),
- dans lequel l'unité de traitement (13) est configurée pour envoyer l'autre jeton (OTK), via l'autre interface (12), via le serveur (41), à un autre dispositif électronique mobile (2) pour permettre au verrou attribué (3) d'être verrouillée ou déverrouillée au moins temporairement par l'autre dispositif électronique mobile (2),
- dans lequel la clé numérique (DK) reste stockée dans le dispositif électronique mobile (1) en tant que clé numérique (DK) utilisable pour verrouiller ou déverrouiller le verrou attribué (3) et transmissible à l'autre dispositif électronique mobile (2) tant que l'étiquette de propriété (OT) - clé numérique (DK) n'est pas libérée,
- dans lequel l'unité de traitement (13) est configurée pour, en réponse à un déclencheur de libération (RLT), envoyer, via l'interface (11), une demande de libération (RR) comprenant une identification de propriété (PIN) au verrou (3) pour que le verrou (3) vérifie l'identification de propriété (PIN) avec l'identification de propriété stockée dans le verrou (3), et en cas de correspondance, supprimer la clé numérique de sa mémoire ou la marquer comme non valide, et définir un état du verrou comme étant non encore attribué, et renvoyer une confirmation de libération (LSC) au dispositif électronique mobile (1) si la vérification de propriété a un résultat positif,
- dans lequel l'unité de traitement (13) est configurée pour, en réponse à la réception de la confirmation de libération (LSC), libérer l'étiquette de propriété (OT) - clé numérique (DK) par un ou plusieurs des moyens suivants
- marquer la clé numérique (DK) comme inactive ;
- retirer la clé numérique (DK) du dispositif électronique mobile (1) ;
- retirer l'étiquette de propriété (OT).

2. Dispositif électronique mobile (1) selon la revendication 1,
dans lequel la clé de cryptage est une clé publique (PBK).

3. Dispositif électronique mobile (1) selon la revendication 2,
dans lequel l'unité de traitement (13) est configurée pour générer l'autre jeton (OT) incluant le cryptage de la clé numérique (DK) par la clé de cryptage (PBK) et fournissant des droits d'accès non cryptés associés (AR).

4. Dispositif électronique mobile (1) selon l'une des revendications précédentes,
dans lequel l'unité de traitement (13) est configurée pour, en réponse à l'envoi de l'autre jeton (OTK), recevoir une confirmation d'état d'accès (ASC) de l'autre dispositif électronique mobile (2).

5. Dispositif électronique mobile (1) selon l'une des revendications précédentes,
dans lequel, pour établir une liaison avec un verrou (3) non encore attribuée à un propriétaire, l'unité de traitement (13) est configurée pour, en réponse à un déclencheur de liaison (LT), envoyer, via l'interface (11), une demande de liaison (LR) comprenant une identification de propriété (PIN), est configurée pour, en réponse à l'envoi de la demande de liaison (LR), recevoir, via l'interface (11), la clé numérique (DK), et est configurée pour, en réponse à la réception de la clé numérique (DK), stocker la clé numérique (DK) dans le dispositif électronique mobile (1) et attribuer l'étiquette de propriété (OT) à la clé numérique (DK).

6. Dispositif électronique mobile (1) selon la revendication 5,
dans lequel l'unité de traitement (13), avant de recevoir la clé numérique (DK), est configurée pour recevoir un message de distribution de verrou (LB) du verrou (3) indiquant un verrou (3) non encore attribuée à une clé numérique (DK).

7. Dispositif électronique mobile (1) selon l'une des revendications précédentes,
dans lequel l'unité de traitement (13), en réponse à un déclencheur de révocation (RVT) pour révoquer l'autorisation de l'autre dispositif électronique mobile (2) à actionner le verrou (3), est configurée pour envoyer, via l'autre interface (12), un message de révocation (RMS).

8. Procédé pour un dispositif électronique mobile (1) permettant à un autre dispositif électronique (2) d'actionner un verrou (3) pouvant déjà être actionné par le dispositif électronique mobile (1), comprenant les étapes suivantes
- en réponse à un déclencheur d'opération de verrouillage (LOT), envoyer un jeton (TK) généré en fonction d'une clé numérique (DK), via une interface (11), au verrou (3), laquelle clé numérique (DK) est
- stockée dans le dispositif électronique mobile (1),
- attribuée au verrou (3) et capable de faire fonctionner le verrou attribué (3), et
- attribuée à une étiquette de propriété (OT),
et laquelle interface (11) est une interface vers un réseau sans fil à courte portée,
- en réponse à l'envoi du jeton (TK) envoyé, recevoir, via l'interface (11), une confirmation d'état de verrouillage (LSC) de la part du verrou (3) lorsqu'il est présent dans la portée du réseau sans fil,
- en réponse à un déclencheur d'octroi d'accès (AGT), envoyer un identifiant (IDV) d'un autre utilisateur (V) à un serveur (41) enregistrant les utilisateurs (U, V) du système de verrouillage incluant une clé de cryptage associée,
- en réponse à l'envoi de l'identifiant (IDV) au serveur (41), recevoir du serveur (41), via l'autre interface (12), une clé de cryptage associée à l'autre utilisateur (V) d'un autre dispositif électronique mobile (2),
- en réponse à la réception de la clé de cryptage, générer un autre jeton (OTK) généré en fonction de la clé numérique (DK) et de la clé de cryptage, et
- envoyer l'autre jeton (OTK), via une autre interface (12), via le serveur (41) à l'autre dispositif électronique mobile (2) pour permettre au verrou attribué (3) d'être actionné au moins temporairement par l'autre dispositif électronique mobile (2), laquelle autre interface (12) est une interface vers un autre réseau,
- stocker la clé numérique (DK) dans le dispositif électronique mobile (1) en tant que clé numérique (DK) pouvant être utilisée pour verrouiller ou déverrouiller le verrou attribué (3) et pouvant être transmise à l'autre dispositif électronique mobile (2) tant que l'attribution étiquette de propriété (OT) - clé numérique (DK) n'est pas libérée,
- en réponse à un déclencheur de libération (RLT), envoyer, par l'intermédiaire de l'interface (11), une demande de libération (RR) comprenant une identification de propriété (PIN) au verrou (3) pour que le verrou (3) vérifie l'identification de propriété (PIN) avec l'identification de propriété stockée dans le verrou (3), et en cas de correspondance, pour supprimer la clé numérique de son stockage ou pour la marquer comme invalide, et pour définir un statut du verrou comme étant encore non attribuée, et pour renvoyer une confirmation de libération (LSC) au dispositif si la vérification de propriété a un résultat positif,
- en réponse à la réception de la confirmation de libération (LSC), libérer l'attribution de l'étiquette de propriété (OT) et de la clé numérique (DK) par un ou plusieurs des moyens suivants
- marquer la clé numérique (DK) comme inactive ;
- retirer la clé numérique (DK) du dispositif électronique mobile (1) ;
- retirer l'étiquette de propriété (OT).

9. Élément de programme informatique, comprenant un code de programme informatique configuré pour exécuter un procédé selon la revendication 8 lorsqu'il est exécuté par une unité de traitement.

10. Système de verrouillage, comprenant
- un dispositif électronique mobile (1), comprenant une interface (11) avec un réseau sans fil à courte portée, une autre interface (12) avec un autre réseau, une unité de traitement (13), et une clé numérique (DK) stockée dans le dispositif électronique mobile (1) pour verrouiller ou déverrouiller un verrou attribué (3),
- le verrou (3), comprenant une interface (31) avec le réseau sans fil à courte portée, une unité de traitement (33), et la clé numérique (DK) stockée dans le verrou (3),
- un autre dispositif électronique mobile (2), comprenant une interface avec l'autre réseau, et une unité de traitement,
- un serveur (41) configuré pour se connecter au dispositif électronique mobile (1) et à l'autre dispositif électronique mobile (2) via l'autre réseau,
- dans lequel l'unité de traitement (13) du dispositif électronique mobile (1) est configurée pour, en réponse à un déclencheur d'opération de verrouillage (LOT), envoyer, via l'interface (11), un jeton (TK) généré en fonction de la clé numérique (DK) au verrou (3),
- dans lequel l'unité de traitement (33) de le verrou (3) est configurée pour, lorsqu'elle est présente dans la portée du réseau sans fil, en réponse au jeton (TK) reçu via son interface (31), vérifier le jeton (TK) au moyen de la clé numérique (DK) stockée dans le verrou (3) et mettre en œuvre une opération de verrouillage ou de déverrouillage en cas de résultat positif de la vérification, et est configurée pour, via l'interface (31), envoyer une confirmation d'état de verrouillage (LSC) au dispositif électronique mobile (1),
- dans lequel l'unité de traitement (13) du dispositif électronique mobile (1) est configurée pour, en réponse à un déclencheur d'autorisation d'accès (AGT), envoyer, via l'autre interface (12), un autre jeton (OTK) généré en fonction de la clé numérique (DK) à l'autre dispositif électronique mobile (2) pour permettre au verrou attribué (3) d'être verrouillée ou déverrouillée au moins temporairement par l'autre dispositif électronique mobile (2),
- dans lequel l'unité de traitement de l'autre dispositif électronique mobile (2) est configurée pour, en réponse à la réception de l'autre jeton (OTK), extraire la clé numérique (DK) et la stocker,
- dans lequel la clé numérique (DK) reste stockée dans le dispositif électronique mobile (1) en tant que clé numérique (DK) utilisable pour verrouiller ou déverrouiller le verrou attribué (3) et transmissible à l'autre dispositif électronique mobile (2) tant que l'attribution étiquette de propriété (OT) - clé numérique (DK) n'est pas libérée,
dans lequel les utilisateurs (U, V) du système de verrouillage sont enregistrés dans le serveur (41) incluant une clé de cryptage associée,
dans lequel l'unité de traitement (13) du dispositif électronique mobile (3) est configurée pour, en réponse au déclencheur d'autorisation d'accès (AGT), envoyer un identifiant (IDV) de l'autre utilisateur (V) au serveur (41),
dans lequel le serveur (41) est configuré pour, en réponse à la réception de l'identifiant (IDV), envoyer une clé de chiffrement (PBK) attribuée à l'autre utilisateur (V) au dispositif électronique mobile (1),
dans lequel l'unité de traitement (13) du dispositif électronique mobile (1) est configurée pour, en réponse à la réception de la clé de cryptage, générer l'autre jeton (OTK) en fonction de la clé numérique (DK) et de la clé de cryptage (PBK), et pour envoyer l'autre jeton (OTK) au serveur (41),
dans lequel le serveur (41) est configuré pour transmettre l'autre jeton (OTK) à l'autre dispositif électronique mobile (2) sans intercepter la clé numérique chiffrée (DK) dans l'autre jeton (OTK),
- dans lequel l'unité de traitement (13) du dispositif électronique mobile (1) est configurée pour, en réponse à un déclencheur de libération (RLT), envoyer, via l'interface (11), une demande de libération (RR) comprenant une identification de propriété (PIN) au verrou (3),
- dans lequel le verrou (3) est configuré pour vérifier l'identification de propriété (PIN) avec l'identification de propriété stockée dans le verrou (3), et en cas de correspondance, pour supprimer la clé numérique de son stockage ou pour la marquer comme invalide, et pour définir un état du verrou comme étant encore non attribué, et pour renvoyer une confirmation de libération (LSC) au dispositif électronique mobile si la vérification de propriété a un résultat positif,
- dans lequel l'unité de traitement (13) du dispositif électronique mobile (1) est configurée pour, en réponse à la réception de la confirmation de libération (LSC), libérer l'étiquette de propriété (OT) - clé numérique (DK) par un ou plusieurs des moyens suivants
- marquer la clé numérique (DK) comme inactive ;
- retirer la clé numérique (DK) du dispositif électronique mobile (1) ;
- retirer l'étiquette de propriété (OT).

11. Système de verrouillage selon la revendication 10,
dans lequel la clé de cryptage est une clé publique (PBK) d'une paire clé privée asymétrique (PRK) - clé publique (PBL) de l'autre utilisateur (V),
dans lequel l'unité de traitement (13) du dispositif électronique mobile (1) est configurée pour chiffrer la clé numérique (DK) au moyen de la clé publique (PBK),
dans lequel l'unité de traitement de l'autre dispositif électronique mobile (2) est configurée pour décrypter l'autre jeton (OTK) au moyen de la clé privée (PRK).

12. Système de verrouillage selon l'une des revendications précédentes 10 ou 11,
dans lequel l'unité de traitement (13) du dispositif électronique mobile (1) est configurée pour générer l'autre jeton (OTK) en incluant des droits d'accès non chiffrés (AR) liés à la clé numérique (DK),
dans lequel en réponse au décryptage de la clé numérique (DK) dans l'autre dispositif électronique mobile (2), la clé numérique (DK) est stockée dans l'autre dispositif électronique mobile (2) en combinaison avec les droits d'accès.
